# EUROPÄISCHE PATENTSCHRIFT

(11) **EP 0 901 583 B1**
(45) Veröffentlichungstag und Bekanntmachung des Hinweises auf die Patenterteilung: **16.08.2001**
(21) Anmeldenummer: 97926997.4
(22) Anmeldetag: 09.06.1997
(51) Int. Cl.: F16G 13/16, H02G 11/00

(54) **FÜHRUNGSRINNE FÜR ENERGIEFÜHRUNGSKETTEN**
GUIDE TROUGH FOR ENERGY MANAGEMENT CHAINS
CANAL DE GUIDAGE POUR CHAINES DE GESTION DE L'ENERGIE

(30) Priorität: 07.06.1996 DE 29610067 U
(43) Veröffentlichungstag der Anmeldung: 17.03.1999
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Stachow, E.-W., Prof. Dr.
(86) Internationale Anmeldenummer: DE9701167
(87) Internationale Veröffentlichungsnummer: WO9747899

(56) Entgegenhaltungen:
- DE-C- 19 512 105
- DE-U- 9 405 115
- DE-U- 29 610 067

## Beschreibung

Die Erfindung betrifft eine Führungsrinne für Energieführungsketten mit langgestreckten, parallelen Seitenteilen, zwischen denen eine Energieführungskette in Längsrichtung ablegbar ist, wobei an der Innenseite der Seitenteile Zubehörteile, insbesondere Gleitschienen mit einer Auflagefläche für die Energieführungskette, befestigbar sind.

Derartige Energieführungrinnen sind beispielsweise aus der DE-PS 195 12 105 bekannt, bei der an der Innenseite der Seitenteile hinterschnittene Ausnehmungen vorgesehen sind, in die ein seitlich an der Gleitschiene angeordneter hakenförmiger Vorsprung einführbar und ohne weitere Befestigungsmittel an dem Seitenteil befestigbar ist. Die Gleitschienen sind so mit geringem Arbeits- und Zeitaufwand an den Seitenteilen befestigbar und wieder entfernbar. Es hat sich jedoch bei derartigen mit einem Hakenprofil versehenen Gleitschienen als nachteilig herausgestellt, daß aufgrund der vergleichsweise großen Länge der Gleitschienen das Einführen des Hakenprofils in die Ausnehmungen der Seitenteile eine gewisse Geschicklichkeit erfordert. Des weiteren bedingt die Ausbildung von hakenförmigen Vorsprüngen an den Gleitschienen sowie von korrespondierenden Ausnehmungen an den Seitenteilen einen vergleichsweise hohen fertigungstechnischen Aufwand.

Der Erfindung liegt die Aufgabe zugrunde, eine Führungsrinne mit Zubehörteilen, insbesondere Gleitschienen, zu schaffen, bei der die Zubehörteile besonders einfach und sicher an den Seitenteilen befestigbar sind und die Seitenteile bzw. Zubehörteile konstruktiv einfach ausgeführt sind.

Erfindungsgemäß wird die Aufgabe dadurch gelöst, daß die Seitenteile mindestens eine ins Innere der Führungsrinne vorstehende, schräg nach oben gerichtete Auflageschräge aufweisen, auf die ein an einem Zubehörteil ebenfalls schräg vorstehendes Halteelement auflegbar ist und von der Auflageschräge unterstützt das Zubehörteil an den Seitenteilen haltert. Hierdurch ist eine konstruktiv einfache Ausgestaltung der Halteelemente sowie der Seitenteile möglich und die vergleichsweise aufwendige Ausbildung von hakenförmigen Vorsprüngen sowie mit diesen korrespondierenden Ausnehmungen entbehrlich. Zur Befestigung der Zubehörteile an den Seitenteilen sind lediglich deren Halteelemente auf die Auflageschrägen der Seitenteile aufzulegen, wodurch ein umständliches Einführen von hakenförmigen Vorsprüngen in die korrespondierenden Ausnehmungen entbehrlich ist. Die Halteelemente können auch erst mit einem Ende auf die Auflageschrägen aufgesetzt werden, was die Befestigung erleichtert. Es hat sich herausgestellt, daß allein durch das Eigengewicht der lose aufgelegten Zubehörteile in Verbindung mit der Schrägstellung der Auflagebereiche der Seitenteile eine ausreichend stabile Befestigung der Zubehörteile an den Seitenteilen möglich ist.

Die Auflageschrägen können beispielsweise konkav oder konvex gekrümmt ausgeführt sein, vorteilhafterweise sind die Auflageschrägen jedoch planar ausgeführt, wodurch die Befestigung der Zubehörteile erleichtert wird. Vorteilhafterweise ist eine großflächige Unterstützung der Halteelemnte der Zubehörteile durch die Auflageschrägen vorgesehen, es ist jedoch eine lediglich bereichsweise Unterstützung bereits ausreichend.

Vorteilhafterweise sind die Auflageschrägen als sich über die gesamte Länge der Seitenteile erstreckende Stege ausgebildet.

Um die Zubehörteile auf unterschiedlichen Höhen an den Seitenteilen befestigen zu können bzw. um gleichzeitig mehrere verschiedene Zubehörteile an den Seitenteilen anzuordnen, sind vorteilhafterweise an jeweils einem Seitenteil mehrere übereinander angeordnete, voneinander beabstandete Auflageschrägen vorgesehen.

Es hat sich als besonders vorteilhaft herausgestellt, wenn die schräg nach unten vorspringenden Halteelemente der Zubehörteile zwischen über- bzw. untereinander angeordneten Auflageschrägen der Seitenteile im Preßsitz gehaltert sind. Hierdurch ist eine einfache und zugleich ortsfeste, d. h. verschiebungssichere Befestigung der Zubehörteile an den Seitenteilen möglich. Ein Klappern von Zubehörteilen wie beispielsweise von Gleitschienen bei schneller Bewegung der in der Führungsrinne angeordneten Energieführungskette, wie sie bei mit hakenförmigen Vorsprüngen versehenen Gleitschienen aufgrund des vorzusehenden Spiels der hakenförmigen Vorsprünge in den korrespondierenden Ausnehmungen stets auftritt, wird hierdurch vermieden. Die hohe Geräuschemission bei schneller Verfahrung der Energieführungskette wird hierdurch deutlich gesenkt. Bei mit hakenförmigen Vorsprüngen befestigten Gleitschienen kann des weiteren ein unbeabsichtigtes Lösen der Gleitschienen von den Seitenteilen erfolgen, wenn die an den Seitenteilen angeordneten Ausnehmungen vergleichsweise groß bemessen sind, um ein einfaches Einführen der hakenförmigen Vorsprünge zu erleichtern, oder wenn die hakenförmigen Vorsprünge relativ klein bemessen sind. Durch die Halterung der Zubehörteile im Preßsitz kann dies sicher vermieden werden. Die Zubehörteile können beispielsweise mittels eines Werkzeuges durch Heraushebeln oder durch leichte Schläge auf die Unterseite von den Seitenteilen demontiert werden.

Als besonders vorteilhaft hat sich herausgestellt, wenn planar ausgebildete Auflageschrägen eine Aufwärtsneigung von größer 45°, vorzugsweise zwischen 50° und 70°, aufweisen. Diese Neigung hat sich als günstig erwiesen, unabhängig davon, ob die Halteelemente der Zubehörteile zwischen den Auflageschrägen im Preßsitz gehaltert sind oder lediglich lose auf den Auflageschrägen aufliegen.

Um besonders formstabile Seitenteile zu schaffen sowie um die bei der Verfahrung der Energieführungskette auftretenden Geräuschemissionen zu verringern, können die Seitenteile als Hohlprofile ausgeführt werden.

Die Zubehörteile für die erfindungsgemäßen Führungsrinnen weisen ein schräg nach unten vorstehendes, vorteilhafterweise geradlinig gestrecktes, Halteelement auf, das mit einer Auflageschräge des Seitenteils zur Auflage bringbar ist.

Sind die Zubehörteile als Gleitschienen ausgeführt, so können diese einen sich von der Auflagefläche für die Energieführungskette vertikal nach oben erstreckenden, zwischen Seitenteil und Energieführungskette anordbaren Vorsprung aufweisen. Durch den Vorsprung wird das Seitenteil von der Energieführungskette beabstandet, so daß eine Beschädigung des Seitenteils bzw. der an diesen angeordneten Auflageschrägen bzw. der Energieführungskette verhindert wird. Dies ist insbesondere bei einer schnellen Bewegung der Energieführungskette von Bedeutung. Sind die Gleitschienen mit derartigen sich vertikal nach oben erstreckenden Vorsprüngen versehen, so ist die Befestigung der Gleitschienen mittels sich von diesen geradlinig nach unten erstreckenden Vorsprüngen besonders vorteilhaft, da eine Verkippung der Gleitschiene, wie sie bei der Befestigung mittels hakenförmiger Vorsprünge notwendig ist, durch die sich vertikal erstreckenden Vorsprünge beträchtlich erschwert wird.

Des weiteren hat es sich als vorteilhaft erwiesen, als Zubehörteile Abdeckkappen vorzusehen, die an den Seitenteilen montiert einen die Oberseite der Seitenteile zumindest teilweise abdeckenden Bereich und eine zum Inneren der Führungsrinne hin abschüssige Einlaufschräge aufweisen, die das Einfädeln der Energieführungskette in die Führungsrinne erleichtert. Durch den die Oberseite der Seitenteile abdeckenden Bereich der Abdeckkappen werden zugleich die ins Innere der Führungsrinne hineinragenden Auflageschrägen bzw. Stege für die Halteelemente der Zubehörteile vor Einwirkungen der Energieführungskette geschützt. Die Abdeckkappe kann die Oberseite der Seitenteile vollständig übergreifen und beispielsweise mit einer Rastleiste versehen sein, die an der Außenseite der Führungsrinne befestigbar ist, so daß die Abdeckkappe auf das Seitenteil aufgeschnappt werden kann. Vorteilhafterweise schließt sich die Einlaufschräge direkt an den die Oberseite des Seitenteils abdeckenden Bereich an.

Des weiteren hat es sich als besonders vorteilhaft erwiesen, als weiteres Zubehörteil einen Wandschutz für das Untertrum der Energieführungskette vorzusehen, der einen zwischen Seitenteil und Energieführungskette anordbaren vertikalen Schenkel aufweist, der die Beabstandung des Untertrums von den Auflageschrägen der Seitenteile gewährleistet, und einen horizontalen Schenkel, auf den das Untertrum ablegbar ist. Vorteilhafterweise ist der horizontale Schenkel gleichzeitig auf der Unterkonstruktion, an welcher die Seitenteile befestigt sind, auflegbar. Durch einen derartigen Wandschutz können im Bereich des Untertrums sowohl die Seitenteile als auch die Auflageschrägen für das Untertrum vor Verschleiß geschützt werden und zugleich durch die Materialauswahl des Wandschutzes eine weitere Geräuschdämpfung bei schneller Verfahrung der Energieführungskette erzielt werden.

Die obengenannten Ausführungsformen der Zubehörteile als Gleitschienen, Abdeckkappen bzw. als Wandschutz sind lediglich beispielhaft, und es können weitere Zubehörteile im Inneren der Führungsrinne mittels auf die Auflageschrägen der Seitenteile auflegbaren Halteelementen befestigt werden. Die Zubehörteile können einzeln und unabhängig voneinander eingesetzt werden.

Bei geeigneter Ausgestaltung der erfindungsgemäßen Führungsrinne sowie der Befestigungsmittel der Zubehörteile kann eine Vielzahl von Zubehörteilen unterschiedlicher Funktionalität an den Seitenteilen befestigt werden, da die Zubehörteile in einer im wesentlichen gleichbleibenden Richtung auf die Seitenteile hin zu bewegen sind, um die Halteelemente mit den Auflageschrägen der Seitenteile zur Auflage zu bringen. Ein Verkippen der Zubehörteile um die Längsrichtung der Führungsrinne, wie sie bei der Befestigung mit hakenförmigen Vorsprüngen notwendig ist und bei der Vorsprünge an den Zubehörteilen stören, ist entbehrlich. Des weiteren sind durch die von den Seitenteilen ins Innere der Führungsrinne vorspringenden Auflageschrägen Ausnehmungen an den Seitenteilen entbehrlich, die eine vergleichsweise aufwendige Formgestaltung der Seitenteile erfordern oder die Wandstärke der Seitenteile in diesem Bereich und damit deren Stabilität sowie geräuschdämpfende Eigenschaften verringern.

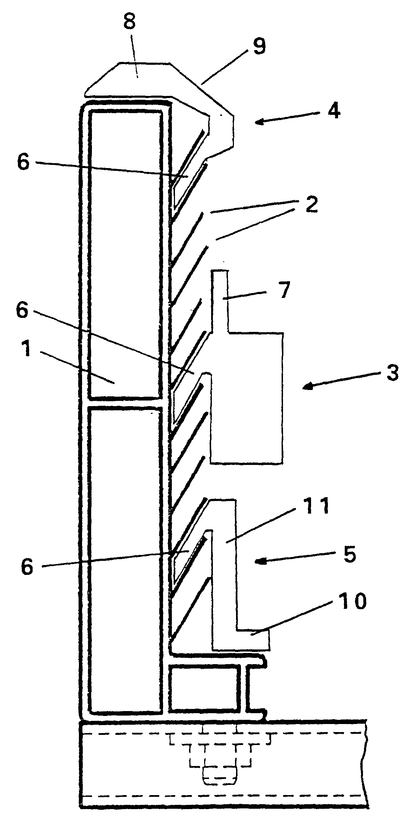

Die Erfindung wird nachfolgende beispielhaft erläutert und anhand der Zeichnung beispielhaft beschrieben.

Die Figur zeigt ein Seitenteil 1 einer Führungsrinne, die aus jeweils parallel zueinander angeordneten Seitenteilen besteht. An der Innenseite der Seitenteile 1 ist eine Vielzahl von gleich beabstandeten Stegen 2 angeordnet, die ins Innere der Führungsrinne hereinragen und sich über die gesamte Länge der Seitenteile 1 erstrecken. Die Stege 2 können beispielsweise einen Abstand von 6 mm zueinander aufweisen, der Abstand kann jedoch insbesondere in Abhängigkeit von der Schwere der Energieführungskette oder der Verfahrgeschwindigkeit größere oder kleinere Werte betragen. Die Stege 2 sind ausgehend vom Seitenteil 1 schräg nach oben zum Inneren der Führungsrinne hin gerichtet, wobei die Neigung der Stege ca. 60° beträgt.

Das Seitenteil 1 ist als Aluminiumhohlprofil ausgebildet, das zusammen mit den Stegen einstückig im Stranggußverfahren hergestellt ist.

An den dem Inneren der Führungsrinne zugewandten Seiten des Seitenteils 1 sind Zubehörteile befestigt, die als Gleitschiene 3, Abdeckkappe 4 oder als Wandschutz 5 ausgeführt sind. Die Zubehörteile sind mit schräg nach unten vorstehenden Halteelementen 6 versehen, die sich über die gesamte Länge der Zubehörteile erstrecken, wobei jedoch auch mehrere voneinander beabstandete Halteelemente an einem Zubehörteil angeordnet sein können. Die Neigung der Halteelemente 6 entspricht der Neigung der Stege 2, wobei die Dicke der Halteelemente 6 so bemessen ist, daß sie zwischen auf unterschiedlicher Höhe angeordneten Stegen 2 im Preßsitz gehaltert werden können.

Die Gleitschienen 3 weisen sich von der Auflagefläche 12 für die Energieführungskette vertikal nach oben erstreckende leistenartige Vorsprünge 7 auf, die bei auf der Gleitschiene 3 aufliegender Energieführungskette zwischen derselben und den an den Seitenteilen 1 befestigten Stegen 2 angeordnet sind. Die Vorsprünge 7 erstrecken sich über die gesamte Länge der Gleitschienen 3, es können jedoch auch mehrere voneinander beabstandete Vorsprünge vorgesehen sein. Durch die Vorsprünge 7 sind die Stege 2 vor Einwirkungen der Energieführungskette geschützt, die bei Abweichungen vom Geradlauf der Energieführungskette auftreten können. Die Vorsprünge 7 dienen somit im wesentlichen als Scheuerleisten.

Des weiteren sind an den Seitenteilen 1 Abdeckkappen 4 befestigt, die einen die Oberseite 13 der Seitenteile 1 abdekkenden Abdeckbereich 8 aufweisen, an den sich zum Inneren der Führungsrinne gerichtet eine Einlaufschräge 9 anschließt, die ein Einfädeln der Energieführungskette in die Führungsrinne erleichtert. Durch die Abdeckkappe 4 wird des weiteren verhindert, daß bei einem Einfädeln der Energieführungskette in die Führungsrinne die im oberen Bereich des Seitenteils 1 angeordneten Stege 2 beschädigt werden.

Als weiteres Zubehörteil ist an dem Seitenteil 1 ein Wandschutz 5 befestigt, der einen horizontalen Schenkel 10 als Auflage für das Untertrum sowie einen vertikalen Schenkel 11 aufweist, der die Energieführungskette von den Stegen 2 beabstandet und ebenso wie der Vorsprung 7 der Gleitschienen 3 als Scheuerleiste dient. Der horizontale Schenkel 10 wird dabei von dem horizontalen Schenkel des Seitenteils 1 unterstützt und liegt satt auf diesem auf.

Aufgrund der zueinander parallelen Ausrichtung der Stege 2 sowie der geradegestreckten Ausführung der Halteelemente 6 sind diese durch einfaches Einschieben zwischen den Stegen 2 befestigbar, wobei die Einschubrichtung sowohl senkrecht zu den Innenwänden der Seitenteile als auch, weniger vorteilhaft, in Längsrichtung der Seitenteile erfolgen kann, bzw. auf einem der Stege 2 ablegbar.

### Bezugszeichenliste

- 1: Seitenteil
- 2: Steg
- 3: Gleitschiene
- 4: Abdeckkappe
- 5: Wandschutz
- 6: Halteelement
- 7: Vorsprung
- 8: Abdeckbereich
- 9: Einlaufschräge
- 10: horizontaler Schenkel
- 11: vertikaler Schenkel
- 12: Auflagefläche
- 13: Oberseite

## Patentansprüche

1. Führungsrinne für Energieführungsketten mit langgestreckten, parallelen Seitenteilen (1), zwischen denen eine Energieführungskette in Längsrichtung ablegbar ist, wobei an der Innenseite der Seitenteile Zubehörteile (3, 4, 5), insbesondere Gleitschienen mit einer Auflagefläche für die Energieführungskette, befestigbar sind, **dadurch gekennzeichnet**, daß die Seitenteile (1) mindestens eine ins Innere der Führungsrinne vorstehende, schräg nach oben gerichtete Auflageschräge (Steg 2) aufweisen, auf die ein an einem Zubehörteil (3, 4, 5) ebenfalls schräg vorstehendes Halteelement (6) auflegbar ist und von der Auflageschräge (Steg 2) unterstützt das Zubehörteil (3, 4, 5) an dem Seitenteil (1) haltert.

2. Führungsrinne nach Anspruch 1, **dadurch gekennzeichnet**, daß die Auflageschrägen als sich über die gesamte Länge der Seitenteile (1) erstreckende Stege (2) ausgebildet sind.

3. Führungsrinne nach Anspruch 1 oder 2, **dadurch gekennzeichnet**, daß jeweils an einem Seitenteil (1) mehrere übereinander angeordnete, voneinander beabstandete Auflageschrägen (Stege 2) vorgesehen sind.

4. Führungsrinne nach einem der Ansprüche 1 bis 3, **dadurch gekennzeichnet**, daß die benachbarte Auflageschrägen (Stege 2) zwischen diesen angeordnete Halteelemente (6) der Zubehörteile (3, 4, 5) im Preßsitz haltern.

5. Führungsrinne nach einem der Ansprüche 1 bis 4, **dadurch gekennzeichnet**, daß die Auflageschrägen eine Neigung von größer 45°, vorzugsweise zwischen 50° und 70°, aufweisen.

6. Führungsrinne nach einem der Ansprüche 1 bis 5, **dadurch gekennzeichnet**, daß die Seitenteile (1) als Hohlprofile ausgebildet sind.

7. Zubehörteil (3, 4, 5) für eine Führungsrinne nach einem der Ansprüche 1 bis 6, **gekennzeichnet durch** ein von dem Zubehörteil (3, 4, 5) schräg nach unten vorstehendes Halteelement (6), das mit einer Auflageschräge (Steg 2) des Seitenteils (1) zur Auflage bringbar ist.

8. Gleitschiene (3) als Zubehörteil nach Anspruch 7, **gekennzeichnet durch** einen sich von der Auflagefläche (12) für die Energieführungskette vertikal nach oben erstreckenden, zwischen Seitenteil (1) und Energieführungskette anordbaren Vorsprung (7).

9. Abdeckkappe (4) als Zubehörteil nach Anspruch 7, **gekennzeichnet durch** einen die Oberseite (13) des Seitenteils (1) zumindest teilweise abdeckenden Bereich (8) und eine zum Inneren der Führungsrinne hin abschüssige Einlaufschräge (9).

10. Wandschutz (5) für das Untertrum der Energieführungskette als Zubehörteil nach Anspruch 7, **gekennzeichnet durch** einen zwischen den Seitenteilen (1) und der Energieführungskette anordbaren vertikalen Schenkel (11) und einen horizontalen Schenkel (10), auf den das Untertrum auflegbar ist.

## Claims

1. Guide trough for energy management chains with parallel, oblong side sections (1), between which an energy management chain can be positioned in longitudinal direction, where fittings (3, 4, 5), in particular slide rails with a support surface for the energy management chain, can be secured to the inside of the side sections, **characterised in that** the side sections (1) display at least one support bevel (cross-member 2) which points obliquely up and protrudes into the guide trough and on which a holding member (6), also protruding obliquely on a fitting (3, 4, 5), can be positioned and, assisted by the support bevel (cross-member 2), fixes the fitting (3, 4, 5) on the side section (1).

2. Guide trough as per Claim 1, **characterised in that** the support bevels are designed as cross-members (2) extending over the entire length of the side sections (1).

3. Guide trough as per Claim 1 or 2, **characterised in that** each side section (1) is provided with several support bevels (cross-members 2), arranged at intervals one above the other.

4. Guide trough as per one of Claims 1 to 3, **charac** **terised in that** adjacent support bevels (cross-members 2) fix holding members (6) of the fittings (3, 4, 5) located between them by means of an interference fit.

5. Guide trough as per one of Claims 1 to 4, **characterised in that** the support bevels have a slope of more than 45°, preferably between 50° and 70°.

6. Guide trough as per one of Claims 1 to 5, **characterised in that** the side sections (1) are designed as hollow sections.

7. Fitting (3, 4, 5) for a guide trough as per one of Claims 1 to 6, **characterised by** a holding member (6), which protrudes obliquely down from the fitting (3, 4, 5) and can be brought into contact with a support bevel (cross-member 2) of the side section (1).

8. Slide rail (3) as a fitting as per Claim 7, **characterised by** a projection (7) which extends vertically upwards from the support surface (12) for the energy management chain and can be positioned between the side section (1) and the energy management chain.

9. Cap (4) as a fitting as per Claim 7, **characterised by** an area (8) which at least partially covers the top side (13) of the side section (1) and a run-in bevel (9) which slopes down into the guide trough.

10. Wall guard (5) for the lower strand of the energy management chain as a fitting as per Claim 7, **characterised by** a vertical leg (11), which can be positioned between the side sections (1) and the energy management chain, and a horizontal leg (10), on which the lower strand can be positioned.

## Revendications

1. Goulotte de guidage pour chaîne de transmission d'énergie, comprenant des parties latérales allongées parallèles (1) entre lesquelles on peut poser une chaîne de transmission d'énergie en direction longitudinale, dans laquelle il est possible de fixer, contre la face intérieure des parties latérales, des composants accessoires (3, 4, 5), en particulier des rails de coulissement avec une surface d'appui pour la chaîne de transmission d'énergie, caractérisée en ce que les parties latérales (1) comportent au moins une pente d'appui (barrette 2) dirigée en oblique vers le haut et dépassant à l'intérieur de la goulotte de guidage, sur laquelle on peut poser un élément de maintien (6) qui dépasse également en oblique sur un composant accessoire (3, 4, 5), ce qui maintient le composant accessoire (3, 4, 5) sur la partie latérale (1) en étant supporté par la pente d'appui (barrette 2).

2. Goulotte de guidage selon la revendication 1, caractérisée en ce que les pentes d'appui sont réalisées sous forme de barrettes (2) qui s'étendent sur la totalité de la longueur des parties latérales (1).

3. Goulotte de guidage selon l'une ou l'autre des revendications 1 et 2, caractérisée en ce qu'il est prévu sur une partie latérale respective (1) plusieurs pentes d'appui (barrettes 2) agencées les unes au-dessus des autres et écartées les unes des autres.

4. Goulotte de guidage selon l'une des revendications 1 à 3, caractérisée en ce que les pentes d'appui voisines (barrettes 2) maintiennent en ajustement serré des éléments de maintien (6), agencés entre lesdites pentes, des composants accessoires (3, 4, 5).

5. Goulotte de guidage selon l'une des revendications 1 à 4, caractérisée en ce que les pentes d'appui ont une inclinaison supérieure à 45°, de préférence comprise entre 50° et 70°.

6. Goulotte de guidage selon l'une des revendications 1 à 5, caractérisée en ce que les parties latérales (1) sont réalisées sous forme de profilés creux.

7. Composant accessoire (3, 4, 5) pour une goulotte de guidage selon l'une des revendications 1 à 6, caractérisé par un élément de maintien (6) dépassant depuis le composant accessoire (3, 4, 5) en oblique vers le bas, susceptible d'être amené en appui sur une pente d'appui (barrette 2) de la partie latérale (1).

8. Rail de coulissement (3) à titre de composant accessoire selon la revendication 7, caractérisé par une saillie (7) qui s'étend verticalement vers le haut depuis la surface d'appui (12) pour la chaîne de transmission d'énergie, et susceptible d'être agencée entre la partie latérale (1) et la chaîne de transmission d'énergie.

9. Capuchon de fermeture (4) à titre de composant accessoire selon la revendication 7, caractérisé par une zone (8) qui recouvre au moins partiellement la face supérieure (13) de la partie latérale (1), et par une pente d'introduction (9) en descente vers l'intérieur de la goulotte de guidage.

10. Protection de paroi (5) pour le brin inférieur de la chaîne de transmission d'énergie, à titre de composant accessoire selon la revendication 7, caractérisée par une joue verticale (11) susceptible d'être agencée entre les parties latérales (1) et la chaîne de transmission d'énergie, et par une joue horizontale (10) sur laquelle peut être posé le brin inférieur.
